# EUROPEAN PATENT APPLICATION

(11) **EP 2 690 523 A2**
(43) Date of publication of application: **29.01.2014**
(21) Application number: 12188278.1
(22) Date of filing: 12.10.2012
(51) Int. Cl.: G06F 3/01

(54) **Method and system for monitoring state of an object**

(30) Priority: 23.07.2012 US 201261674429 P
(71) Applicant: Sony Mobile Communications AB, 221 88 Lund (SE)
(72) Inventor: Mårtensson, Linus, 246 50 Löddeköpinge (SE); Stenberg, Pär, 247 62 Veberöd (SE); Agevik, Markus, 212 30 Malmö (SE); Thörn, Ola, 216 12 Limhamn (SE)
(74) Representative: Valea AB

(57) **Abstract**

The present invention relates to a method and system for monitoring an object (221, 222, 223, 224). The method comprises: utilizing a first sensor system comprising at least one sensor (110) disposed in a monitored space to store first data on the monitored space, utilizing a second sensor system (115) to store second data on an object of interest to be monitored; analyzing first data produced by the first sensor system with a signal processing equipment by searching from the stored first data at least one object to be monitored and by comparing parameters describing characteristics of the at least one detected object with stored reference parameters corresponding to reference characteristics and list of interested objects based on the information received from the second sensor system; and generating, on the basis of an event detected in the analysis, information relating to the state of the object.

## Description

### TECHNICAL FIELD

The present invention relates to monitoring objects in general and monitoring state of objects and providing information on state of the objects in particular by means of an electrical device.

### BACKGROUND

Generally, monitoring state of objects is a normal but time consuming procedure for almost each person done every day. Monitoring may comprise processing visual, information for determining at least one state of at least one object or article, e.g. to find and implement a decision with respect to the at least one detected state.

The object or article may be one or several of, e.g.: Close the dish washer, place a warm object in a safe place, close fridge door, alarm the house, shut off TV, etc.

A person may often forget that one or several of the activities are done and a problem is to find and remember and index the activities.

### SUMMARY

The present invention provides an arrangement and a method for logging states of objects and relevant activities and providing a user with relevant information when needed, and thus allowing the user spend less time on controlling state of objects. The solution of the invention relies mainly on visual interest and thus puts less demand on the monitoring system

For these reasons, a method for monitoring an object is provided; the method comprising: utilizing a first sensor system comprising at least one sensor disposed in a monitored space to store first data on the monitored space, utilizing a second sensor system to store second data on an object of interest to be monitored; analyzing first data produced by the first sensor system with a signal processing equipment by searching from the stored first data at least one object to be monitored and by comparing parameters describing characteristics of the at least one detected object with stored reference parameters corresponding to reference characteristics and list of interested objects based on the information received from the second sensor system; and generating, on the basis of an event detected in the analysis, information relating to the state of the object. In one embodiment the second sensor system is a camera for monitoring eyes of a user for eye tracking. According to one embodiment the first sensor system is a camera system. The second sensor system may be a camera for monitoring eyes of a user for eye tracking. In one embodiment the second sensor system comprises a sensor for detecting identity information of the object. The first sensor system may comprise a sensor system comprising one or several of an image recording (visual, heat, IR, UV), acoustic, sound, vibration sensing sensors, chemical analyzing sensors, sensors for detecting electric current or electric potential, electromagnetic detectors, radio frequencies sensors, environmental sensors, weather sensors, moisture or humidity sensors, flow sensors, sensors for detecting one or several position, angle, displacement, distance, speed or acceleration; senores for measuring pressure, force, density, level; sensors for thermal, heat or temperature; and proximity or presence sensor. The second sensor system, according to one embodiment, comprises a reader for RFID or barcode. The method may also comprise: utilizing a camera system comprising at least one camera disposed in a monitored space to store images of the monitored space, utilizing a sensor system to store object of interest to be monitored; analyzing images produced by the camera system with a signal processing equipment by searching from the stored images at least one object to be monitored and by comparing parameters describing forms of the at least one object detected in the images with stored reference parameters corresponding to reference forms and list of interested objects based on the information received from the sensor system; and generating, on the basis of an event detected in the analysis, information relating to the state of the object.

The invention also relates to a system for monitoring an object. The system comprises: a first sensor system comprising at least one sensor disposed in a monitored space to store data on the monitored space, a second sensor system to store data on object of interest; a processing unit configured to: analyze data produced by the first sensor system by searching from the stored data at least one object to be monitored and by comparing parameters describing characteristics of the at least one object detected in the data with stored reference parameters corresponding to reference characteristics and list of interested objects based on the data from the second sensor system; and generate on the basis of an event detected in the analysis, information relating to the state of the object.

In one embodiment, the sensor system is a camera for monitoring eyes of a user for eye tracking. According to one embodiment the first sensor system is a camera system. The second sensor system may be a camera for monitoring eyes of a user for eye tracking. The second sensor system may also comprise a sensor for detecting identity information of the object. In on embodiment, the first sensor system comprises a sensor system comprising one or several of an image recording (visual, heat, IR, UV), acoustic, sound, vibration sensing sensors, chemical analyzing sensors, sensors for detecting electric current or electric potential, electromagnetic detectors, radio frequencies sensors, environmental sensors, weather sensors, moisture or humidity sensors, flow sensors, sensors for detecting one or several position, angle, displacement, distance, speed or acceleration; senores for measuring pressure, force, density, level; sensors for thermal, heat or temperature; and proximity or presence sensor. In one embodiment, the second sensor system comprises a reader for RFID or barcode.

### BRIEF DESCRIPTION OF THE DRAWINGS

Reference is made to the attached drawings, wherein elements having the same reference number designation may represent like elements throughout.
Fig. 1 is a diagram of an exemplary system in which methods and systems described herein may be implemented;
Fig. 2 illustrates a schematic view of a space monitored by a system according to embodiment of the invention, and
Fig. 3 is a flow diagram illustrating exemplary processing by the system of Fig. 1.

### DETAILED DESCRIPTION

The following detailed description refers to the accompanying drawings. The same reference numbers in different drawings may identify the same or similar elements.

The term "image," as used herein, may refer to a digital or an analog representation of visual information (e.g., a picture, a video, a photograph, animations, etc.).

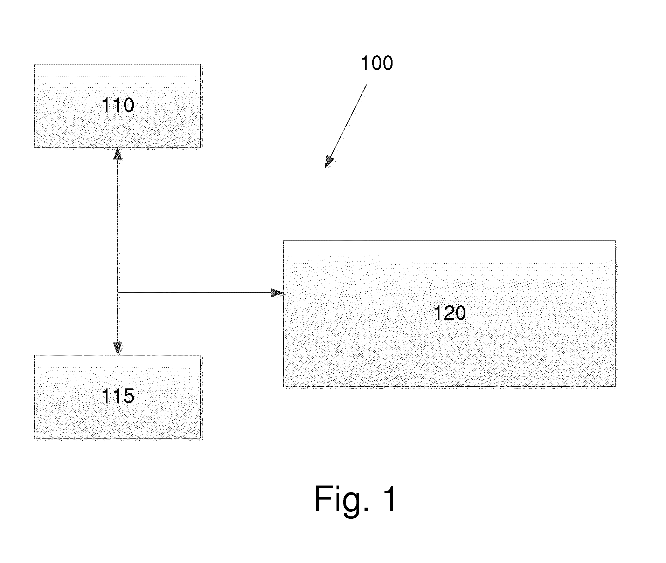

The arrangement 100 of the invention, as illustrated schematically in fig. 1, basically comprises an image recording portion 110, a sensor for providing object of interest 115 and a processing portion 120 communicating with the image recording portion 110 and sensor 115.

The operation of the invention is based on monitoring the object by a camera and a second camera for monitoring the object. The first camera records the position and/or state of the object and the sensor is used for providing information about which objects are interesting for a user.

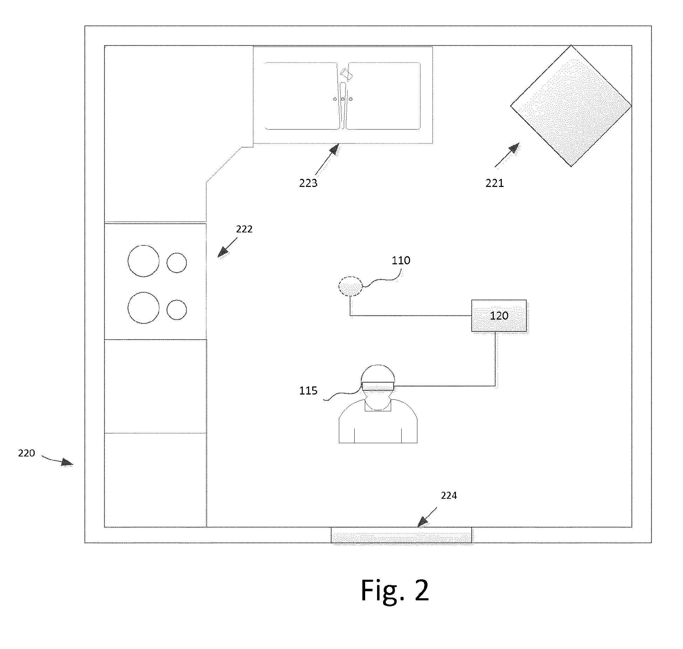

Fig. 2 illustrates schematically a setup according to a one embodiment of the invention. In a room, such as a kitchen 220, an image recording portion comprises a camera 110, e.g. a camera with wide angel vision (so-called fish-eye camera), is for example mounted in the ceiling of the kitchen. The camera 110 monitors the space and records the states of different objects, such as refrigerator 221 door, stove 222 hotplates, sink tap 223, window 224, etc. The recorded image is transmitted to a processing device 120, which indexes the states and or position of the objects.

According to this embodiment, the sensor for providing object of interest is a camera for tracking eyes of the user. A user 240 is equipped with a camera 115 monitoring the user's eye movement (eye tracking). The result of the eye tacking is provided to the processing unit 120.

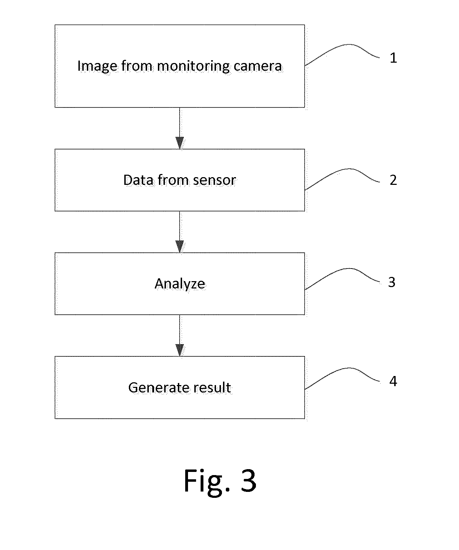

The processing unit processes (Fig. 3) the data from both cameras 110 and 115, (steps 1 and 2) and assembles a map comprising of user's focus on the different objects, i.e. what in each view a user tends to look at. Eye tracking may measure e.g. amount of gaze time, pupil dilatation etc. Other types of eye tracking (contact or contactless) such as attachment to the eye, such as a special contact lens with an embedded mirror or magnetic field sensor, or measuring electric potentials with electrodes placed around the eyes may also be used.

Analyzing 3 may comprise searching from the stored images at least one object to be monitored and by comparing parameters describing forms of the at least one object detected in the images with stored reference parameters corresponding to reference forms and list of interested objects based on the information received from the eye tracking camera and generating 4, on the basis of an event detected in the analysis, information relating to the state of the object.

Additionally, the system may position the user in the room to make a more accurate decision on the objects focused upon.

The processing unit may measure the time the person spends looking at different objects to record the objects of interest.

Then the processing unit may visually map the states of the objects, e.g. by overlaying them on top and detect the object's state, such as an open door, an open tap etc.

Combining the position, objects and the eye tracking results in a list of recent objects and state of the objects may be generated. The list may be filtered to provide deviating states, e.g. window open. The lists may be filtered based on location, time, event, priority etc.

According to another embodiment of the invention, the camera 110 for recording object images and the eye tracking camera 115 may be combined e.g. in an eyeglass or goggle.

In one embodiment, the state of the object may be monitored using visual and/or audible and/or physical and/or chemical characteristics. Thus, a sensor system comprising one or several of an image recording (visual, heat, IR, UV), acoustic, sound, vibration sensing sensors, chemical analyzing sensors, sensors for detecting electric current or electric potential, electromagnetic detectors, radio frequencies sensors, environmental sensors, weather sensors, moisture or humidity sensors, flow sensors, sensors for detecting one or several position, angle, displacement, distance, speed or acceleration; senores for measuring pressure, force, density, level; sensors for thermal, heat or temperature; and proximity or presence sensors, etc.

Using different types of sensors may thus allow for measuring and monitoring different characteristics for both static and dynamic objects and changes. The monitored objects may also include humans and animals, and objects carried by them, e.g. a kid having a cap or jacket (weather dependent), a dog having leash (inside or outside an area). Changes in e.g. characteristics of objects over a longer time may also be monitored, e.g. food stuff changing character (getting moldy, maturing, etc.)

In yet another embodiment, instead of eye tracking, camera sensors or RIFID tags, barcodes, matrix barcodes, identifying markers, etc. may be used attached to objects to provide information about which objects are interesting for the user.

The user may use the image recording (i.e. object of interest detection and/or one time or periodically. Then the system may provide the user with information on the state of the objects or most interesting objects without any need for using the cameras (of course the object monitoring camera must be operational).

In one embodiment, the processing unit is incorporated in an electrical device. A "device" as the term is used herein, is to be broadly interpreted to include a radiotelephone, e.g. having ability for Internet/intranet access, web browser, organizer, calendar, a camera (e.g., video and/or still image camera), a sound recorder (e.g., a microphone), and/or global positioning system (GPS) receiver; a personal communications system (PCS) terminal that may combine a cellular radiotelephone with data processing; a personal digital assistant (PDA) that can include a radiotelephone or wireless communication system; a laptop; a camera (e.g., video and/or still image camera) having communication ability; and any other computation or communication device capable of transceiving, such as a personal computer, a home entertainment system, a television, etc.

The various embodiments of the present invention described herein is described in the general context of method steps or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Software and web implementations of various embodiments of the present invention can be accomplished with standard programming techniques with rule-based logic and other logic to accomplish various database searching steps or processes, correlation steps or processes, comparison steps or processes and decision steps or processes. It should be noted that the words "component" and "module," as used herein and in the following claims, is intended to encompass implementations using one or more lines of software code, and/or hardware implementations, and/or equipment for receiving manual inputs.

The foregoing description of embodiments of the present invention, have been presented for purposes of illustration and description. The foregoing description is not intended to be exhaustive or to limit embodiments of the present invention to the precise form disclosed, and modifications and variations are possible in light of the above teachings or may be acquired from practice of various embodiments of the present invention. The embodiments discussed herein were chosen and described in order to explain the principles and the nature of various embodiments of the present invention and its practical application to enable one skilled in the art to utilize the present invention in various embodiments and with various modifications as are suited to the particular use contemplated. The features of the embodiments described herein may be combined in all possible combinations of methods, apparatus, modules, systems, and computer program products.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be implemented at least in part by means of both hardware and software, and that several "means", "units" or "devices" may be represented by the same item of hardware.

## Claims

1. A method for monitoring an object (221, 222, 223, 224), the method comprising:
• utilizing a first sensor system comprising at least one sensor (110) disposed in a monitored space to store first data on the monitored space,
• utilizing a second sensor system (115) to store second data on an object of interest to be monitored;
• analyzing first data produced by the first sensor system with a signal processing equipment by searching from the stored first data at least one object to be monitored and by comparing parameters describing characteristics of the at least one detected object with stored reference parameters corresponding to reference characteristics and list of interested objects based on the information received from the second sensor system; and
• generating, on the basis of an event detected in the analysis, information relating to the state of the object.

2. The method of claim 1, wherein said second sensor system is a camera for monitoring eyes of a user for eye tracking.

3. The method of claim 1 or 2, wherein said first sensor system is a camera system.

4. The method of claim 1 or 2, wherein said second sensor system is a camera for monitoring eyes of a user for eye tracking.

5. The method of claim 1 or 2, wherein said second sensor system comprises a sensor for detecting identity information of the object.

6. The method of claim 1 or 2, wherein first sensor system comprises a sensor system comprising one or several of an image recording (visual, heat, IR, UV), acoustic, sound, vibration sensing sensors, chemical analyzing sensors, sensors for detecting electric current or electric potential, electromagnetic detectors, radio frequencies sensors, environmental sensors, weather sensors, moisture or humidity sensors, flow sensors, sensors for detecting one or several position, angle, displacement, distance, speed or acceleration; senores for measuring pressure, force, density, level; sensors for thermal, heat or temperature; and proximity or presence sensor.

7. The method of claim 5, wherein said second sensor system comprises a reader for RFID or barcode.

8. The method of claim 1 further comprising:
• utilizing a camera system comprising at least one camera (110) disposed in a monitored space (220) to store images of the monitored space,
• utilizing a sensor system to store object of interest to be monitored;
• analyzing images produced by the camera system with a signal processing equipment by searching from the stored images at least one object to be monitored and by comparing parameters describing forms of the at least one object detected in the images with stored reference parameters corresponding to reference forms and list of interested objects based on the information received from the sensor system; and
• generating, on the basis of an event detected in the analysis, information relating to the state of the object.

9. A system for monitoring an object (221, 222, 223, 224), the system comprising:
• a first sensor system comprising at least one sensor (110) disposed in a monitored space (220) to store data on the monitored space (220),
• a second sensor system to store data on an object of interest;
• a processing unit (120) configured to:
• analyze data produced by the first sensor system by searching from the stored data at least one object to be monitored and by comparing parameters describing characteristics of the at least one object detected in the data with stored reference parameters corresponding to reference characteristics and list of interested objects based on the data from the second sensor system; and
• generate on the basis of an event detected in the analysis, information relating to the state of the object.

10. The system of claim 9, wherein said sensor system is a camera for monitoring eyes of a user for eye tracking.

11. The system of claim 9 or 10, wherein said first sensor system is a camera system.

12. The system of claim 9 or 10, wherein said second sensor system is a camera for monitoring eyes of a user for eye tracking.

13. The system of claim 9 or 10, wherein said second sensor system comprises a sensor for detecting identity information of the object.

14. The system of claim 9 or 10, wherein said first sensor system comprises a sensor system comprising one or several of an image recording (visual, heat, IR, UV), acoustic, sound, vibration sensing sensors, chemical analyzing sensors, sensors for detecting electric current or electric potential, electromagnetic detectors, radio frequencies sensors, environmental sensors, weather sensors, moisture or humidity sensors, flow sensors, sensors for detecting one or several position, angle, displacement, distance, speed or acceleration; senores for measuring pressure, force, density, level; sensors for thermal, heat or temperature; and proximity or presence sensor.

15. The system of claim 13, wherein said second sensor system comprises a reader for RFID or barcode.
